# EUROPEAN PATENT APPLICATION

(11) **EP 4 804 490 A1**
(43) Date of publication of application: **09.09.2026**
(21) Application number: 24887552.8
(22) Date of filing: 19.08.2024
(51) Int. Cl.: H04L 65/1016

(54) **RENDERING METHOD, COMMUNICATION NODE, AND STORAGE MEDIUM**

(30) Priority: 06.11.2023 CN 202311477557
(71) Applicant: ZTE Corporation, Shenzhen, Guangdong 518057 (CN)
(72) Inventor: LI, Qiuting, Shenzhen, Guangdong 518057 (CN); HUANG, Cheng, Shenzhen, Guangdong 518057 (CN)
(74) Representative: Vossius & Partner Patentanwälte Rechtsanwälte mbB
(86) International application number: PCT/CN2024/113056
(87) International publication number: WO 2025/097932

(57) **Abstract**

The present application discloses a rendering method, a communication node, and a storage medium. The rendering method includes: negotiating rendering resources for rendering call service media data (S110); transmitting the call service media data to a media function network element to which the rendering resources belong (S120); and rendering the call service media data based on the rendering resources (S130).

## Description

### FIELD

The present application relates to the field of communication technology, for example, to a rendering method, a communication node, and a storage medium.

### BACKGROUND

With the deployment of the 5th generation mobile communication technology (5G) network, calls are no longer limited to audio and video calls in the related art. 5G calls may incorporate additional features based on the calls in the related art, such as superimposing augmented reality (AR) features based on the calls in the related art, so as to improve the experience of 5G call services and provide richer call services, such as fun calls and remote collaboration.

Based on the demands such as increased media data volume, diversified data types, the complexity of media processing, and improved experience in the 5G call services, higher requirements are imposed on media capabilities of terminals. Rendering media data is an indispensable processing step. Therefore, how to enhance the rendering efficiency of the media data for the call services remains an urgent problem to be currently solved.

### SUMMARY

The present application provides a rendering method, a communication node, and a storage medium.

In a first aspect, an embodiment of the present application provides a rendering method including: negotiating rendering resources for rendering call service media data; transmitting the call service media data to a media function network element to which the rendering resources belong; and rendering the call service media data based on the rendering resources.

In a second aspect, an embodiment of the present application provides a rendering method including: negotiating rendering resources for rendering call service media data; associating the call service media data to a media function network element to which the rendering resources belong; and transmitting the call service media data to the media function network element.

In a third aspect, an embodiment of the present application provides an Internet protocol multimedia subsystem including one or more processors and a storage apparatus storing one or more programs that, when executed by the one or more processors, cause the one or more processors to implement the method of the embodiments of the present application.

**In** a fourth aspect, an embodiment of the present application provides a communication node including one or more processors and a storage apparatus storing one or more programs that, when executed by the one or more processors, cause the one or more processors to implement the method of the embodiments of the present application.

**In** a fifth aspect, an embodiment of the present application provides a storage medium having computer programs stored thereon, the computer programs, when executed by a processor, implement the method of the embodiments of the present application.

Further descriptions regarding the above-mentioned embodiments and other aspects of the present application, as well as the implementations, are provided in the description of the accompanying drawings, detailed description of embodiments, and claims.

### BRIEF DESCRIPTION OF THE DRAWINGS

FIG. 1 is a schematic flowchart of a rendering method according to an embodiment of the present application;
FIG. 2 is a schematic structural diagram of a communication system according to an embodiment of the present application;
FIG. 3A is a schematic diagram of a network architecture of an Internet protocol multimedia subsystem according to an embodiment of the present application;
FIG. 3B is a schematic diagram of a rendering process of a terminal device according to an embodiment of the present application;
FIG. 3C is a schematic flowchart of initiating the separated rendering by the network side according to an embodiment of the present application;
FIG. 3D is a schematic flowchart of initiating the separated rendering by the terminal side according to an embodiment of the present application;
FIG. 3E is a schematic flowchart of initiating a re-negotiation by UE according to an embodiment of the present application;
FIG. 3F is a schematic flowchart of initiating a re-negotiation by the network side according to an embodiment of the present application;
FIG. 4 is a schematic flowchart of another rendering method according to an embodiment of the present application;
FIG. 5 is a schematic structural diagram of a rendering apparatus according to an embodiment of the present application;
FIG. 6 is a schematic structural diagram of a rendering apparatus according to an embodiment of the present application;
FIG. 7 is a schematic structural diagram of an Internet protocol multimedia subsystem according to an embodiment of the present application; and
FIG. 8 is a schematic structural diagram of a communication node according to an embodiment of the present application.

### DETAILED DESCRIPTION OF EMBODIMENTS

Steps shown in flowcharts of the accompanying drawings may be performed in a computer system, such as a set of computer-executable instructions. In addition, although logical sequences are shown in the flowcharts, in some cases, the steps illustrated or described may be performed in a different order than presented here.

In the present application, the terms "first", "second", etc. are used to distinguish similar objects, but are not used to describe a specific sequence or precedence order.

With the advent of 5G calls, media data has characteristics such as high definition, immersion, and real-time interactivity, necessitating enhancements in the transmission, processing, and presentation of media data to adapt to various services and application scenarios in 5G calls. Based on the demands such as increased data volume, diversified data types, the complexity of media processing, and improved experience in the 5G AR call services, higher requirements are imposed on media capabilities of terminals. Rendering media data is an indispensable processing step, with AR-related data processing placing higher requirements for a central processing unit (CPU) and a graphics processing unit (GPU). A 3rd generation partnership project (3GPP) has proposed rendering based on terminal devices (user equipment, UE) and network-based rendering, and process examples are respectively provided based on two rendering methods. However, based on different media data types, different service types, and varying media processing capabilities of terminals and networks, the selection of rendering methods is diversified. A reasonable rendering solution is required to meet service demands of AR calls and enhance the user service experience. Accordingly, the present application provides a rendering method.

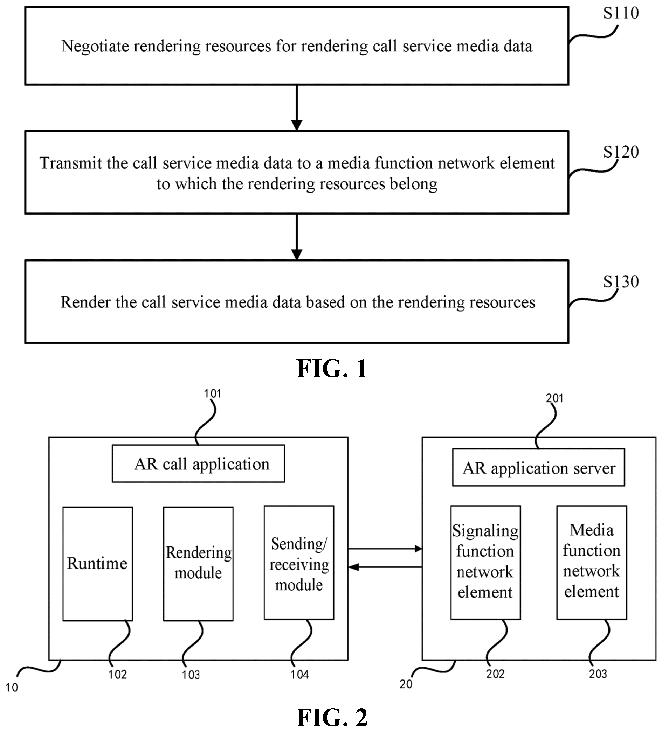

In an exemplary implementation, FIG. 1 is a schematic flowchart of a rendering method according to an embodiment of the present application, and the method may be applicable to a case of rendering call service media data. The method may be performed by a rendering apparatus, and the apparatus may be implemented by software and/or hardware and integrated on an Internet protocol multimedia subsystem.

FIG. 2 is a schematic structural diagram of a communication system according to an embodiment of the present application. The communication system may be an IP multimedia subsystem (IMS)-based communication node that implements AR calls. The communication system is composed of a terminal device 10 and an IP multimedia subsystem 20. The terminal device 10 includes the following modules.

An AR call application 101 may be regarded as an application that implements AR calls. The AR call application provides a media call application or a media call service based on 5G augmented reality for the terminal device 10. The AR calls may be considered as calls on which AR features are superimposed.

A runtime 102 obtains locally collected call service media data of the terminal device 10, also called call service media information, and other modules of the terminal device 10 may access, through an open interface, data/information obtained by the runtime.

A rendering module 103 provides local rendering processing of the terminal device 10 for the locally collected call service media data/call service media information and call service media data/information transmitted by the IP multimedia subsystem 20.

A sending/receiving module 104 establishes session(s) between the terminal device and the IP multimedia subsystem 20, performs session management, and meanwhile sends and receives the call service media data/information.

The IP multimedia subsystem (IMS) 20 includes the following modules: an AR application server 201 that controls the service logic(s) of the AR calls; a signaling function network element 202 that establishes session management with the terminal device, and meanwhile manages or forwards signaling between various function network elements in the IP multimedia subsystem 20; and a media function network element 203 that provides media processing function(s) for the call service media data in the AR call service, such as rendering.

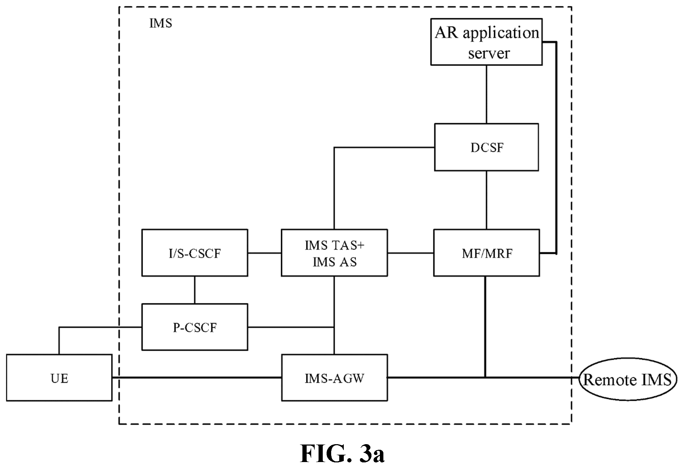

FIG. 3A is a schematic diagram of a network architecture of an Internet protocol multimedia subsystem (IMS) according to an embodiment of the present application. This embodiment provides an architecture example diagram of a 5G-based IMS network architecture supporting AR call services.

AR application server (ARAS): it is responsible for service control of AR calls, including AR session media control and negotiation with the UE on session service media capabilities and media resources. The AR application server may be deployed in an IMS network or a third-party non-IMS network. In the second deployment method, the AR application server interacts with the UE through the IMS network via network open capabilities, controlling the service logic(s) of the AR calls, providing AR call applications, etc.

Media function/media resource function (MF/MRF): it supports media processing of AR call service media data. The media processing logic(s) for the AR call services may be received from the IMS application server (AS) and stored, and corresponding media capabilities are provided for the AR call service media data received from the UE (including AR-related 2D audio and video data, 3D audio and video data, 3D models, scenario descriptions, AR metadata, etc.).

Telephone application server and application server for IP multimedia system (IMS TAS + IMS AS): it supports functions and negotiation of the control plane. A DCSF is interacted for event notification, data channel control instructions from the DCSF are received, correspondingly, the MF/MRF is interacted for data channel media resource management, meanwhile, media control instructions from the DCSF are received, and correspondingly, the UE is interacted to be connected to the MF/MRF to transmit the AR call service media data generated by the UE to the MF/MRF.

Data channel signaling function (DCSF): it provides the data channel control capability.

IMS access gateway (IMS-AGW): it performs network address translation and exchanges media plane data.

Call session control function (CSCF): it is responsible for session control and routing, including control of functions such as registration and authentication, session control, routing management, network management, and billing, which are closely related to user services.

Proxy CSCF (P-CSCF): it is the first connection point with users in the IMS, providing proxy functions and also offering user agent functions.

Interrogating CSCF (I-CSCF): it is similar to a gateway node in the IMS, allocating S-CSCF, performing routing queries, and hiding inter-IMS domain topologies.

Serving CSCF (S-CSCF): it holds the core control position in the IMS core network, responsible for registration and authentication of the UE, conference control, user data management, etc.

The MF/MRF may be referred to as a media function network element. The AR AS may be referred to an application service network element. Other network elements may be session control network elements of the control plane.

As shown in FIG. 1, the present application provides a rendering method, including the following.

S110, negotiating rendering resources for rendering call service media data.

The call service media data may be considered as media data in a call service scenario. A call service may be a service that implements calls. The rendering resources may be considered as resources for rendering the call service media data.

This embodiment may be performed by the network side, such as the Internet protocol multimedia subsystem. The Internet protocol multimedia subsystem may negotiate with a sender of the call service media data, namely a communication node that sends the call service media data, regarding the rendering resources in the Internet protocol multimedia subsystem configured for rendering the call service media data, to achieve separated rendering of the call service media data.

The negotiation of the rendering resources in this embodiment may be initiated by the Internet protocol multimedia subsystem or the communication node.

When it is initiated by the Internet protocol multimedia subsystem, the Internet protocol multimedia subsystem may initiate a request to the communication node after determining the allocation of the rendering resources to achieve negotiation with the communication node. The Internet protocol multimedia subsystem may also send a first rendering negotiation request to the communication node, and allocate the rendering resources for the communication node after the communication node agrees to the separated rendering.

S120, transmitting the call service media data to a media function network element to which the rendering resources belong.

Through this operation, the call service media data is transmitted to the media function network element to which the rendering resources belong, thereby associating the call service media data with the media function network element to which the rendering resources belong, that is, anchoring the call service media data with the media function network element, and thus allowing the media function network element to render the call service media data.

The media function network element to which the rendering resources belong may be considered as a media function network element to which the rendering resources are allocated. The media function network element may be a network element with a media function, such as an MF or an MRF.

S130, rendering the call service media data based on the rendering resources.

Through this operation, the call service media data from the communication node is rendered through the rendering resources, thereby implementing the separated rendering of the call service media data. The call service media data may be media data rendered by the communication node or media data not rendered by the communication node.

This embodiment of the present application provides a rendering method. The Internet protocol multimedia subsystem performs negotiation about the rendering resources, thereby implementing the determination of the rendering resources for the call service media data of the communication node. After determining the rendering resources, the rendering resources in the Internet protocol multimedia subsystem may be used to render the call service media data of the communication node. The negotiation of the rendering resources and the configuration of the rendering resources on the network side are achieved. The separated rendering of the call service media data improves the rendering efficiency of the call service media data.

Based on the above-mentioned embodiment, a variant embodiment of the above-mentioned embodiment is proposed. It should be noted that, for brevity of description, only differences from the above-mentioned embodiment are described in the variant embodiment.

In an embodiment, the negotiating the rendering resources for rendering call service media data includes: initiating the first rendering negotiation request; configuring the rendering resources; and transmitting configuration information for the rendering resources.

The first rendering negotiation request may be considered as a request to implement rendering resource negotiation. The Internet protocol multimedia subsystem may configure the rendering resources, that is, allocate the rendering resources, based on the first rendering negotiation request. After configuring the rendering resources, the configuration information for the rendering resources may be transmitted, such as transmitting the configuration information to the communication node to which the call service media data belongs.

The configuration information may be considered as information for configuring the rendering resources, such as a rendering resource identifier, a computing power value, a data format, a rendering object, and a rendering type. The rendering resource identifier may be considered as information for identifying the rendering resources.

In this embodiment, the first rendering negotiation request may be a request transmitted within the Internet protocol multimedia subsystem, such as initiating the first rendering negotiation request through the application service network element in the Internet protocol multimedia subsystem, which may be a request initiated to the media function network element.

The first rendering negotiation request in this embodiment may also be a request sent by the Internet protocol multimedia subsystem to the communication node to which the call service media data belongs.

The communication node to which the call service media data belongs may be the sender of the call service media data.

In an embodiment, the initiating the first rendering negotiation request includes: initiating the first rendering negotiation request through the application service network element in the Internet protocol multimedia subsystem; or transmitting the first rendering negotiation request to the communication node to which the call service media data belongs.

In this embodiment, the first rendering negotiation request may be initiated to the media function network element through the application service network element to request the media function network element to allocate the rendering resources.

In this embodiment, the Internet protocol multimedia subsystem may be used to transmit the first rendering negotiation request to the communication node to which the call service media data belongs, thereby implementing the negotiation about the rendering resources with the communication node to which the call service media data belongs.

The application service network element may be considered as a network element that provides application service functions, such as the AR application server.

In an embodiment, the configuring the rendering resources includes: configuring the rendering resources through the media function network element in the Internet protocol multimedia subsystem.

In a case of sending the first rendering negotiation request to the media function network element, the media function network element may configure the rendering resources.

In a case where the response from the communication node to which the call service media data belongs indicates agreement to the separated rendering for the first rendering negotiation request, the media function network element may configure the rendering resources.

In an embodiment, the negotiating rendering resources for rendering call service media data includes: obtaining a second rendering negotiation request; determining the rendering resources for the call service media data based on the second rendering negotiation request; and transmitting configuration information for the rendering resources.

The second rendering negotiation request may be considered as a request for rendering negotiation initiated by the communication node to which the call service media data belongs.

After obtaining the second rendering negotiation request, the Internet protocol multimedia subsystem may determine the rendering resources for rendering the call service media data. After determining the rendering resources, the configuration information for the rendering resources may be transmitted to the communication node to which the call service media data belongs. For example, the configuration information may be considered as information indicating the rendering resources configured for the communication node to which the call service media data belongs, as well as rendering input/output format description information.

After obtaining the configuration information, the communication node to which the call service media data belongs may directly use the rendering resources based on the indication in the configuration information to achieve rendering of the call service media data; or the communication node may determine whether to use the configured rendering resources, and if not, the communication node may initiate the negotiation again.

In an embodiment, obtaining the second rendering negotiation request includes: obtaining the second rendering negotiation request through the application service network element.

The Internet protocol multimedia subsystem may obtain, through the application service network element, the second rendering negotiation request transmitted by the communication node to which the call service media data belongs. Then, the request is forwarded through the application service network element. The forwarded request may be a processed second rendering negotiation request, or the second rendering negotiation request is forwarded directly.

In an embodiment, the determining the rendering resources for the call service media data based on the second rendering negotiation request includes: forwarding the second rendering negotiation request to the media function network element through the application service network element; and determining the rendering resources for the call service media data through the media function network element.

The application service network element may process and forward the second rendering negotiation request to the media function network element. Processing means are not limited herein. For example, the application service network element may preliminarily determine whether to provide a media rendering function based on the second rendering negotiation request. The application service network element may send a determined result and the second rendering negotiation request to the media function network element in a separated or combined manner. The application service network element may also send the negotiation request to the media function network element according to a message format specified by the media rendering function for resource negotiation requests.

The media function network element may allocate the rendering resources to the call service media data based on data received from the application service network element. For example, the rendering resources are allocated to the call service media data according to information carried in the rendering request forwarded to the media function network element.

In an embodiment, the transmitting the call service media data to the media function network element to which the rendering resources belong includes: transmitting an association request for the call service media data, the association request indicating associating the call service media data with the media function network element in the Internet protocol multimedia subsystem.

The association request is configured to anchor the call service media data to the media function network element.

According to this embodiment, the association request is transmitted to facilitate the rendering of the call service media data by the media function network element.

In an embodiment, the transmitting the association request for the call service media data includes: transmitting the association request for the call service media data to the media function network element through the application service network element.

In an embodiment, the rendering method further includes: transmitting, through a real-time transport protocol channel and/or an application data channel, the call service media data and/or first indication information, where the first indication information indicating a rendering condition of the call service media data, and the call service media data including rendered data and/or unrendered data.

The real-time transport protocol channel may be considered as a channel based on a real-time transport protocol, which may be configured to transmit the call service media data.

For example, the application data channel may be considered as a channel based on a stream control transmission protocol (SCTP), which may allow the users to transmit the call service media data and data format information.

The rendering condition may be a condition indicating information related to the rendering, such as whether the rendering is performed.

The rendered data may be data that is rendered by the communication node to which the call service media data belongs.

According to this embodiment, the call service media data and the first indication information are obtained, the rendering condition of the call service media data may be determined based on the first indication information, and then, the call service media data is rendered based on the rendering request. After rendering, the data may be returned to the communication node to which the call service media data belongs or transmitted to a node communicating with the communication node to which the call service media data belongs.

In an embodiment, the rendering method further includes: re-negotiating the rendering resources.

In this embodiment, the re-negotiation of the rendering resources may be implemented. As a rendering capability of the terminal side and/or the network side changes, the rendering resources may also be re-negotiated in this embodiment to achieve adaptive rendering.

The content of the re-negotiation may be whether rendering is performed by the network side. If the rendering is required by the network side, the allocation of the rendering resources on the network side needs to be considered, including whether to increase or reduce the rendering resources.

In an embodiment, the re-negotiating the rendering resources includes: obtaining a first re-negotiation request for the rendering resources; and transmitting a resource allocation result corresponding to the first re-negotiation request.

The first re-negotiation request may be a re-negotiation request initiated by the terminal side. The re-negotiation request may be considered as a request that triggers the re-negotiation of the rendering resources.

In this embodiment, the initiating of re-negotiation may be implemented by the terminal side. After obtaining the first re-negotiation request, the network side may allocate the rendering resources, and then transmit the resource allocation result for the rendering resources to the terminal side. The resource allocation result may indicate the allocation of the rendering resources after re-negotiation.

In an embodiment, the re-negotiating the rendering resources includes: initiating a second re-negotiation request for the rendering resources through the media function network element or the application service network element in the Internet protocol multimedia subsystem, where the second re-negotiation request includes a resource allocation result.

The second re-negotiation request may be a re-negotiation request initiated by the network side. In a case of changes in the rendering capability of the Internet protocol multimedia subsystem, the second re-negotiation request may be initiated through the media function network element and/or the application service network element, such as initiating the second re-negotiation request to the terminal side.

In this embodiment, when the Internet protocol multimedia subsystem initiates the second re-negotiation request, the resource allocation result may be carried. After reallocating the rendering resources for the terminal side, the second re-negotiation request is initiated to the terminal side.

The application service network element may transmit the second re-negotiation request to the media function network element, and the resource allocation result carried by the second re-negotiation request may be a preliminary determination result of the application service network element.

**In** an embodiment, the media function network element in the Internet protocol multimedia subsystem allocates resources based on the first re-negotiation request or the second re-negotiation request.

After forwarding the first re-negotiation request to the media function network element, the media function network element may be triggered to allocate the resources.

After forwarding the second re-negotiation request to the media function network element, the media function network element may allocate the rendering resources in combination with the second re-negotiation request.

**In** an embodiment, the rendering the call service media data based on the rendering resources includes: transmitting the call service media data to the rendering resources allocated by the media function network element in the Internet protocol multimedia subsystem through the real-time transport protocol channel and/or the application data channel; and rendering the call service media data through the rendering resources allocated by the media function network element.

**In** an embodiment, the call service media data includes at least one of the following in an augmented reality call scenario: two-dimensional audio and video data, three-dimensional audio and video data, a three-dimensional model, a scenario description, or augmented reality metadata.

The scenario description may be description information of a scenario. The augmented reality metadata may be metadata in an augmented reality scenario.

The following provides an exemplary description of the present application. The rendering method provided in the present application may be considered as a 5G AR call service method. The present application takes into account the media processing capabilities of the communication terminal device and the media processing capabilities of the IMS network, providing different combinations of local terminal device rendering and network rendering for media data such as graphics and images in services, thereby satisfying real-time immersive experience of the AR call services. The negotiation, reasonable allocation, and utilization of media processing resources on the local terminal device and the network, as well as media data transmission under different rendering modes are mainly implemented. By efficiently utilizing the media processing resources of the terminal device and the network, a favorable AR call experience in terms of vision, latency, and the like can be achieved. Meanwhile, through the reasonable allocation of the media processing resources, richer media services may also be obtained.

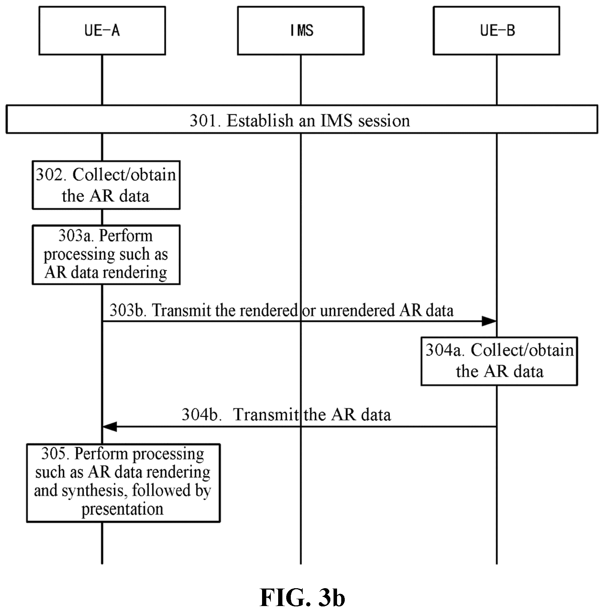

FIG. 3B is a schematic diagram of a rendering process of a terminal device according to an embodiment of the present application. Referring to FIG. 3B, when the terminal device has a strong capability, the terminal device may directly render media data and/or media metadata, and then present or send the media data and/or media metadata to a terminal device on the other side. This method does not require an edge server or a central server on the network side to participate in the rendering processing, thereby reducing the delay in a transmission process (without transmitting to relevant network elements in the network for media processing such as rendering, and directly transmitting to the terminal device on the other side through an IMS access gateway). The media data and/or media metadata may be considered as call service media data to be rendered.

FIG. 3B illustrates a UE rendering process for an IMS-based AR call.

At 301, establishing an IMS session.

The process is initiated by the UE-A, the IMS session is established between the UE-A and UE-B, including the establishment of a real-time transport Protocol (RTP) channel, a bootstrap data channel, and an application data channel.

The UE-A and the UE-B may be considered as communication nodes that perform the call. The bootstrap data channel may be considered as a channel for transmitting bootstrap data. The application data channel may be considered as a channel for transmitting application data. The bootstrap data may be considered as data that guides the implementation of a call function, such as an AR call application and AR call service media data. The application data may be considered as application-related data.

If the UE-A and the UE-B do not preset the AR call application, the AR call application needs to be obtained through the bootstrap data channel (a hypertext markup language (HTML) method may be used), and if the UE-A and the UE-B preset the AR call application, establishing the bootstrap data channel to obtain the AR call application may not be required.

When the AR call application is obtained through the bootstrap data channel, the preset/pre-stored AR call service media data (e.g., a scenario description and a 3D model) related to the AR call application may also be obtained.

For example, when the application data channel is established, the UE-A may be directly anchored to the MF/MRF, and when the application data channel is established, the AR application server may directly distribute the AR call service media data (e.g., the scenario description and the 3D model) using the application data channel through the MF/MRF.

The AR call service media data may be any type of media data, such as a scenario description applicable to the AR call service, a 3D model (an object and a digital human) stored by the IMS system or the AR application server, 2D audio and video data obtained by the terminal device, metadata (e.g., a user posture), and the like.

For example, both the rendered and unrendered AR call service media data of the UE-A may be transmitted over the RTP channel.

At 302, collecting/obtaining the AR data.

The UE-A collects/obtains the AR call service media data, including an AR model (an object and a person), posture information of users, and the like, through one or more devices such as camera(s) and sensor(s) (which may be integrated in a terminal device).

At 303a, performing processing such as AR data rendering.

For example, the UE-A performs processing and rendering based on the collected AR call service media data. The call service media data collected/obtained by the UE-A may be directly sent to the UE-B without processing or rendering, and the UE-B may process the call service media data independently.

At 303b, transmitting the rendered or unrendered AR data.

The UE-A sends the rendered or unrendered AR call service media data (also called AR data) to the UE-B. If the AR call service media data locally rendered by the UE-A is only used for local display, that is, the rendered AR data does not need to be sent to the UE-B, the sequence of 303a and 303b may be interchanged, or 303a and 303b may be performed in parallel, thereby reducing the delay caused by transmitting the unrendered AR call service media data to the receiving terminal UE after local rendering and processing.

For call service media data of a real-time audio and video type (e.g., 2D audio and video data), the RTP channel is typically used for transmission, and for non-real-time, overlay, 3D, or other data type, the application data channel is typically used for transmission.

At 304a, collecting/obtaining the AR data.

The UE-B collects/obtains the AR call service media data through one or more devices such as camera(s) and sensor(s) (which may be integrated in a terminal device). A collection behavior of the UE-B in this operation may be synchronized with that of UE-A.

At 304b, transmitting the AR data.

The UE-B transmits the collected AR call service media data to the UE-A.

For example, the UE-B may also perform local rendering before transmitting the AR call service media data to the UE-A.

At 305, performing processing such as AR data rendering and synthesis, followed by presentation.

The UE-A performs further processing, such as rendering a 3D model and 3D audio and video, or merging a plurality of 3D models into a scenario according to the posture (the position and the viewport) of the user, based on receiving the AR call service media data transmitted by the UE-B. The UE-A presents the rendered AR call service media data to the user. If the AR call service media data transmitted by the UE-B is rendered, the UE-A may not render again (e.g., rendering based on the current viewport).

When the sending terminal UE sends the AR call service media data to the receiving terminal UE, if the sending terminal UE completes rendering, the receiving terminal UE needs to be prompted when the AR data is transmitted, and the receiving terminal UE independently decides whether to perform further rendering (e.g., rendering based on a current viewport). If the sending terminal UE does not perform rendering, the receiving terminal UE still needs to be prompted when the AR call service media data is sent, the receiving terminal UE may be further prompted about rendering recommendation and other information (e.g., a recommendation viewport and a rendering object description), and the receiving terminal UE independently decides how to render.

When the terminal device has a limited capability, the terminal device may request the edge server or the central server on the network side to render, including: before sending the AR call service media data, the sending terminal UE may perform processing such as rendering on the AR call service media data, and then sends the unrendered and/or rendered AR call service media data to the network side for rendering processing, and after the network side completes rendering, the AR call service media data may be sent to the receiving terminal UE and returned to the sending terminal UE. The separated rendering method can reduce the volume of media data transmitted, shorten the media data caching and loading time of the server, and the like.

The sending terminal UE directly sends the AR call service media data that needs to be rendered to the network side for rendering, returns the AR call service media data to the sending terminal UE after rendering, and may send the AR call service media data to the receiving terminal UE. Through the method, the receiving terminal UE and the sending terminal UE can render in parallel, or can render on the terminal side after the network side completes rendering, and the delay caused by rendering can be reduced during parallel rendering.

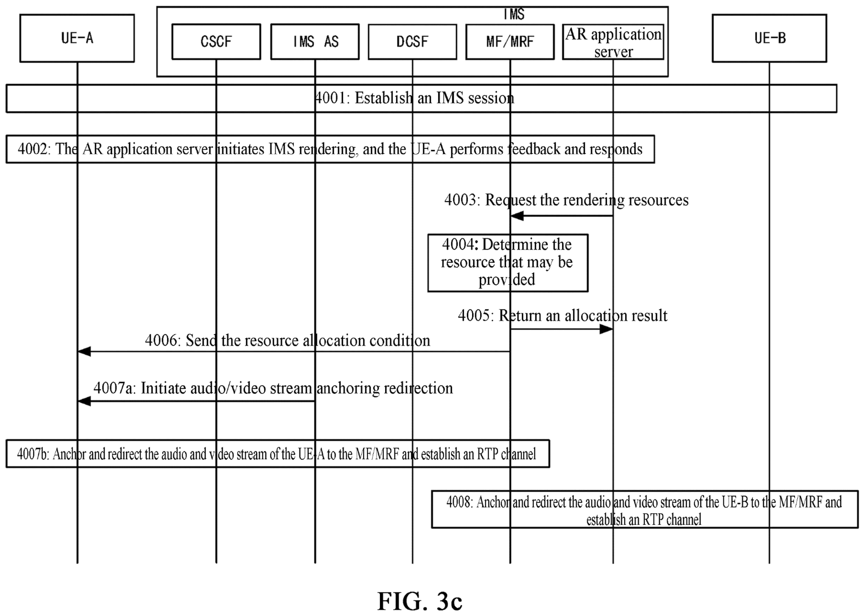

FIG. 3C is a schematic flowchart of initiating the separated rendering by the network side according to an embodiment of the present application. Referring to FIG. 3C, a separated rendering negotiation process for an IMS-based AR call (the separated rendering initiated by the network side) is as follows.

At 4001, establishing an IMS session.

The process is initiated by the UE-A, the IMS session is established between the UE-A and the UE-B through the IMS system, including the RTP channel and the application data channel.

If the UE-A and the UE-B do not preset the AR call application, the AR call application needs to be obtained through the bootstrap data channel (the HTML method may be used), and if the UE-A and the UE-B preset the AR call application, establishing the bootstrap data channel to obtain the AR call application may not be required.

When the AR call application is obtained through the bootstrap data channel, the preset/pre-stored AR call service media data (e.g., a scenario description and a 3D model) related to the AR call application may also be obtained.

For example, when the application data channel is established, the UE-A may be directly anchored to the MF/MRF, and when the application data channel is established, the AR application server may directly distribute the AR call service media data (e.g., the scenario description and the 3D model) using the application data channel through the MF/MRF.

The AR call service media data may be any type of media data, such as a scenario description applicable to the AR call service, a 3D model (an object and a digital human) stored by the IMS system or the AR application server, 2D audio and video data obtained by a terminal, metadata (e.g., a user posture), and the like.

For example, the application data channel may be established after completing rendering resource negotiation or the application data channel may not need to be established, with the second method meaning that all AR call service media data is transmitted through the RTP channel.

At 4002, the AR application server initiates IMS rendering, and the UE-A performs feedback and responds.

The AR application server sends a separated rendering negotiation request to the UE-A, informing the UE-A that the separated rendering can be provided (i.e., transmitting the first rendering negotiation request to the communication node to which the call service media data belongs). The UE-A returns agreement or disagreement to the negotiation.

The separated rendering may be considered as collaborative rendering among a plurality of devices, such as local rendering in conjunction with network-side rendering.

For example, the AR application server may directly request the MF/MRF to allocate resources, and then negotiate the separated rendering with the UE-A, or inform the UE-A of the rendering resource configuration of the separated rendering according to allocated resources. That is, the first rendering negotiation request is initiated by the application service network element in the Internet protocol multimedia subsystem, the rendering resources are configured through the media function network element in the Internet protocol multimedia subsystem, and the configuration information for the rendering resources is transmitted to the UE-A.

At 4003, requesting the rendering resources.

If the UE-A returns an agreement to negotiate the separated rendering, the AR application server requests the MF/MRF to allocate the rendering resources based on characteristics, the service type, and the like of the AR call application of the UE-A, where the request message is forwarded to the MF/MRF through the DCSF and IMS AS.

For example, if the AR application server directly requests the MF/MRF to allocate resources, the process proceeds directly to 4004 for rendering resource negotiation between the AR application server and the MF/MRF.

At 4004, the MF/MRF configures the rendering resources that may be provided according to the condition of the rendering resources (e.g., idle computing power), characteristics of AR call services of the UE-A (e.g., the media data type and real-time performance requirements), the service type, etc., including determining an available rendering resource identifier, a computing power value, a data format, a rendering object, a rendering type, etc. That is, the rendering resources are configured through the media function network element in the Internet protocol multimedia subsystem.

At 4005, returning an allocation result.

The MF/MRF returns a configuration result for the rendering resources to the AR application server.

At 4006, sending the resource allocation condition.

The MF/MRF sends the configuration information for the rendering resources to the UE-A (i.e., transmitting the configuration information for the rendering resources), where the AR application server may initiate the sending of the configuration information for the rendering resources, or the MF/MRF may actively send the configuration information for the rendering resources after completing the configuration of the rendering resources. The configuration information may be sent by means of a request (e.g., a SIP INVITE message).

For example, if the separated rendering negotiation with the UE-A is not performed in 4002, the negotiation request (e.g., the SIP INVITE message) may be initiated directly by sending the configuration information in 4006, providing the configuration information for the rendering resources in the message. That is, the first rendering negotiation request is initiated by the application service network element in the Internet protocol multimedia subsystem, the rendering resources are configured through the media function network element in the Internet protocol multimedia subsystem, and the configuration information for the rendering resources is transmitted to the UE-A.

At 4007a, initiating audio/video stream anchoring redirection.

The IMS AS initiates re-negotiation, requesting that streaming media transmitted through the RTP channel of the UE-A be anchored to the MF/MRF.

For example, when forwarding the rendering resource configuration completed by the MF/MRF, the IMS AS may send the information in the form of re-negotiation, including the configuration information for the rendering resources and a request to anchor the streaming media (e.g., call service media data) transmitted through the RTP channel of the UE-A to the MF/MRF, that is, combining 4006 with 4007a.

At 4007b, anchoring and redirecting the audio and video stream of the UE-A to the MF/MRF and establishing an RTP channel.

According to the response of the UE-A to the rendering resource configuration, the IMS AS anchors the RTP channel of the UE-A to the MF/MRF (i.e., transmitting an association request for the call service media data), and the RTP channel is established between the UE-A and the MF/MRF.

If the RTP channel transmits the call service media data that needs to be rendered, data to be transmitted over the RTP channel may be indicated through information during channel establishment to support MF/MRF rendering.

At 4008, anchoring and redirecting the audio and video stream of the UE-B to the MF/MRF and establishing an RTP channel.

The IMS AS initiates re-negotiation to anchor the streaming media transmitted over the RTP channel of the UE-B to the MF/MRF, and the RTP channel is established between the UE-B and the MF/MRF.

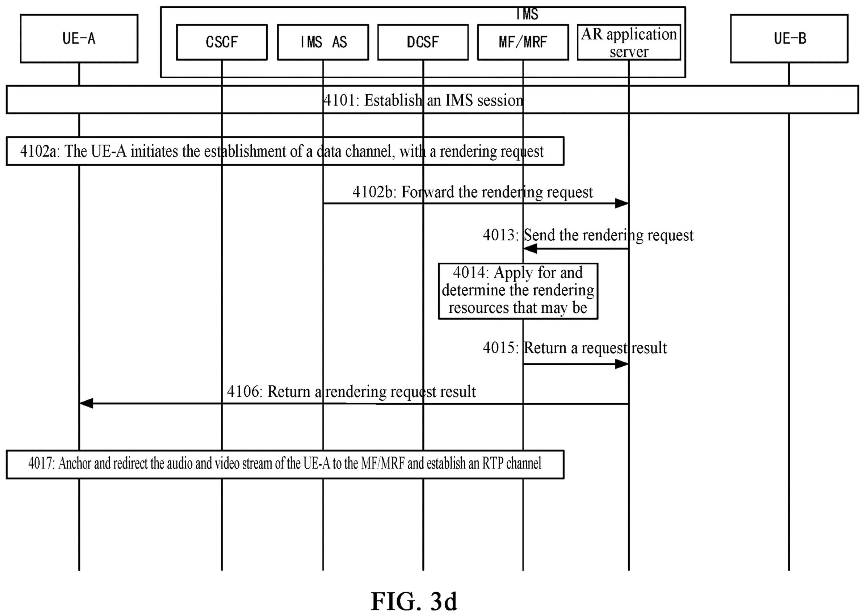

FIG. 3D is a schematic flowchart of initiating the separated rendering by the terminal side according to an embodiment of the present application. A separated rendering negotiation process for an IMS-based AR call (the separated rendering initiated by the terminal side) is as follows.

At 4101, establishing an IMS session.

The process is initiated by the UE-A, the IMS session is established between the UE-A and the UE-B through the IMS system, including the RTP channel.

If the UE-A and the UE-B do not preset the AR call application, the AR call application needs to be obtained through the bootstrap data channel (the HTML method may be used), and if the UE-A and the UE-B preset the AR call application, establishing the bootstrap data channel to obtain the AR call application may not be required.

When the AR call application is obtained through the bootstrap data channel, the preset/pre-stored AR call service media data (e.g., a scenario description and a 3D model) related to the AR call application may also be obtained.

For example, when the application data channel is established, the UE-A may be directly anchored to the MF/MRF, and when the application data channel is established, the AR application server may directly distribute the AR call service media data (e.g., the scenario description and the 3D model) using the application data channel through the MF/MRF.

The AR call service media data may be any type of media data, such as a scenario description applicable to the AR call service, a 3D model (an object and a digital human) stored by the IMS system or the AR application server, 2D audio and video data obtained by the terminal device, metadata (e.g., a user posture), and the like.

For example, the application data channel may be established after completing rendering resource negotiation or the application data channel may not need to be established, with the second method meaning that all AR call service media data is transmitted through the RTP channel.

At 4102a, the UE-A initiates the establishment of a data channel, with a rendering request.

The UE-A initiates a request to establish an application data channel between the UE-A and the MF/MRF, and sends, based on the request, a media rendering negotiation request to the IMS system, namely the second rendering negotiation request.

If the application data channel transmits the call service media data that needs to be rendered, information may be used to indicate that the data transmitted via the application data channel supports MF/MRF rendering.

An AR application on the UE-A determines to initiate a separated rendering negotiation process in a case where media capabilities of a client (a current state, e.g., a power state, a signal state, a computing power state, and an internal storage state) may not meet rendering requirements for the application in the AR call.

For example, the UE-A may initiate the media rendering negotiation request directly to the IMS system without initiating an application data channel establishment request. Moreover, the request is transmitted to the IMS AS in the IMS system. That is, the second rendering negotiation request is obtained through the application service network element.

At 4102b, forwarding the rendering request.

The IMS AS forwards the rendering request (i.e., the media rendering negotiation request) to the AR application server. The negotiation request may include information such as computing power required for rendering, a media data description (a data type, a frequency, and a size), and a type of rendering. That is, the second rendering negotiation request is forwarded to the media function network element through the application service network element, and the AR application server may act as an intermediary during forwarding.

At 4013, sending the rendering request.

The AR application server sends a media resource request (i.e., the rendering request) to the MF/MRF, and requests the MF/MRF to allocate rendering resources for the media data required by the AR call service or for the AR call service. The request message forwards the message to the MF/MRF through the DCSF and the IMS AS, and additionally may carry application data channel address information of the UE-A, audio and video address information, and address information of the receiving terminal UE-B.

For example, the AR application server may preliminarily determine whether to provide the media rendering function according to the request of the UE-A in 4013.

At 4014, applying for and determining the available rendering resources.

The MF/MRF configures the rendering resources for the UE-A based on the received rendering request and the information carried in the request. That is, the rendering resources for the call service media data is determined through the media function network element.

At 4015, returning a request result.

After successfully configuring the MF/MRF resource, a successful response is returned to the AR application server through the IMS AS, carrying the address information allocated on the MF/MRF. The address information indicates an address to which the media data to be rendered is transmitted, thereby transmitting the configuration information for the rendering resources.

At 4106, returning a rendering request result.

The AR application server sends a media rendering negotiation response to the UE-A, indicating whether the media rendering negotiation is successful. This response is forwarded through network elements within the IMS system, such as the IMS AS and the DCSF. The request result is ultimately notified to a renderer and the AR application within the UE-A, thereby transmitting the configuration information for the rendering resources.

For example, the request result may be returned through the application data channel between the UE-A and the MF/MRF.

If the request of the UE-A contains information such as a specific computing power value and a rendering capability, and the rendering resources requested by the MF/MRF are limited, a final resource allocation result (which may be different from the requested resource) may be included in the response returned to the UE-A.

The returned configuration information may include a data format to be inputted by the UE-A, a possible media format that the MF/MRF may feedback, and the like.

At 4017, anchoring and redirecting the audio and video stream of the UE-A to the MF/MRF and establishing an RTP channel.

The IMS AS initiates a media re-negotiation process to anchor the media stream of the AR call service media data of the UE-A to the MF/MRF (i.e., transmitting an association request for the call service media data). The UE-A sends a response carrying the address information of the UE-A, and completes the establishment of the RTP channel between the UE-A and the MF/MRF.

If the IMS network accessed by the UE-B is different from the IMS network accessed by the UE-A, and the IMS network accessed by the UE-B also provides the rendering resources and rendering functions, the media stream of the AR call service media data may be directly transmitted to the UE-B after the IMS network accessed by the UE-A completes a rendering requirement of the UE-A. The media stream of the AR call service media data may also be transmitted to the MF/MRF of the IMS network accessed by the UE-B, which requires the network element (MF/MRF) in the IMS network accessed by the UE-A and the network element (MF/MRF) of the IMS network accessed by the UE-B to anchor the media stream of the AR call service media data, and the media stream of the AR call service media data transmitted by the IMS network accessed by the UE-A may be anchored to the MF/MRF of the IMS network accessed by the UE-B through re-negotiation between the IMS AS and the MF/MRF of the IMS network accessed by the UE-B.

If the MF/MRF in the IMS network accessed by the UE-B completes rendering of the received AR call service media data, the MF/MRF may determine whether to perform rendering again according to the negotiated rendering resources, a rendering type, and locally collected AR call service media data (e.g., metadata like posture information) transmitted by the UE-B.

If the UE-A or the IMS network accessed by the UE-A completes rendering, when the AR call service media data is transmitted to the MF/MRF of the IMS network accessed by the UE-B, it is necessary to indicate that the transmitted AR call service media data completes rendering. Conversely, if rendering is not completed, the indication is needed during data transmission.

For rendering resource negotiation for the separated rendering initiated by the AR application server on the network side, if network-side rendering resources change, resource re-negotiation may be initiated by either the AR application server on the network side or the UE on the terminal side. The AR application server may also select to keep the rendering resources fixed.

In the process of the AR call service, the rendering resources or capabilities change on the terminal side or network side, or other reasons requiring re-negotiation of the rendering resources exist, such as network changes, changes in rendering costs, and image security issues. For rendering resource negotiation for the separated rendering initiated by the AR application server on the network side or a UE side terminal, if the rendering resources change, resource re-negotiation may be initiated by either the AR application server on the network side or the UE on the terminal side. Typically, when the rendering resources are allocated by the AR application server on the network side, the rendering resources remain unchanged.

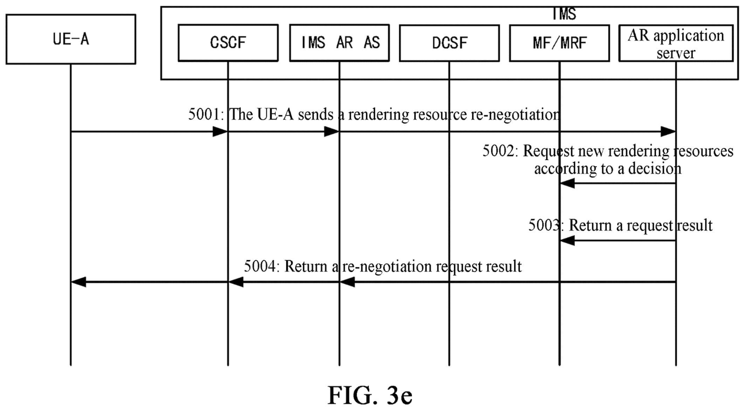

FIG. 3E is a schematic flowchart of initiating a re-negotiation by UE according to an embodiment of the present application. Referring to FIG. 3E, an adaptive rendering re-negotiation process (initiated by the UE) of an IMS-based AR call is as follows.

At 5001, the UE-A sends a rendering resource re-negotiation.

The UE-A sends a new rendering requirement (i.e., the first re-negotiation request) to the AR application server.

At 5002, requesting new rendering resources according to a decision.

The AR application server determines whether to request an increase or decrease in rendering resources, and requests, according to this decision, the MF/MRF to increase or decrease the rendering resources.

At 5003, returning a request result.

The MF/MRF returns a response indicating whether the allocation of increased or reduced resources is successful to the AR application server.

At 5004, returning a re-negotiation request result.

The AR application server feeds back a configuration result for the rendering resources to the UE-A. That is, a resource allocation result corresponding to the first re-negotiation request is transmitted.

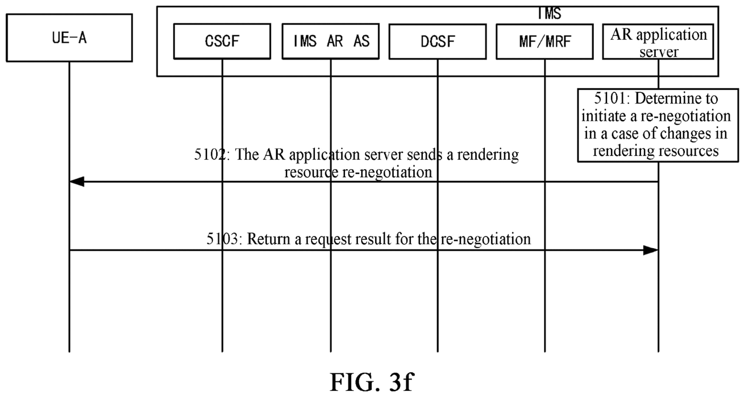

FIG. 3F is a schematic flowchart of initiating a re-negotiation by the network side according to an embodiment of the present application. Referring to FIG. 3F, an adaptive rendering re-negotiation process (initiated by the AR application server) of an IMS-based AR call is as follows.

At 5101, determining to initiate a re-negotiation in a case of changes in rendering resources.

Based on changes in obtained MF/MRF resources, a current UE-A rendering requirement may not be satisfied, and the AR application server determines to send a rendering resource re-negotiation, that is, the media function network element or the application service network element in the Internet protocol multimedia subsystem initiates a second re-negotiation request for the rendering resources.

At 5102, the AR application server sends a rendering resource re-negotiation.

The AR application server sends a rendering resource re-negotiation process, and sends a rendering resource change and new rendering resources to the UE-A, that is, the second re-negotiation request includes a resource allocation result.

At 5103, returning request information of the re-negotiation.

The UE-A receives the rendering resource change and the new rendering resources, and returns a response to the AR application server.

If the rendering resources newly provided by the AR server cannot meet the requirement of the UE-A, the UE-A may request re-allocation of the rendering resources again according to the current device capability condition. If the UE-A has a strong device capability currently and can complete rendering independently, the rendering resource configuration provided by the IMS network may be canceled through the response, and anchoring with a media processing network element may also be maintained without data transmission.

If the UE-A does not use the rendering resources provided by the IMS network, the RTP channel or the application data channel between the UE-A and the MF/MRF may be canceled by the re-negotiation, and the UE-A may directly transmit the rendered or unrendered AR call service media data to the receiving terminal UE-B through the IMS-AGW.

In the process of the AR call service, the UE applies for the IMS network to provide the rendering resources due to an insufficient media capability, but the media capability may change dynamically, and due to changes in rendering content or objects, the UE may adaptively select whether to use the rendering resources from the network based on a current state and service content.

Method 1: at least two media data transmission channels are established between the UE-A and the UE-B, at least one media data channel is the RTP channel, the call service media data transmitted through the RTP channel is directly transmitted to the UE-B (or a network element of the IMS network to which the UE-B belongs) through the IMS-AGW of the IMS network without passing through MF/MRF, and the RTP channel transmits call service media data without rendering (e.g., 2D audio and video data); and one media data channel is the RTP channel or the application data channel, the channel is connected from the UE-A to the MF/MRF, the call service media data of the UE-A is transmitted to the MF/MRF, rendered by the MF/MRF, and then sent to the UE-B (or the network element of the IMS network to which the UE-B belongs) through the MF/MRF, and call service media data (e.g., a 3D model and 2D video data) that needs to be rendered is transmitted by the channel.

When the media data transmission channel is established, the media data transmission channel needs to be instructed to transmit the call service media data that needs to be rendered.

Method 2: at least one media data transmission channel is established between the UE-A and the MF/MRF, the media data channel is the RTP channel or the application data channel, the RTP channel or the application data channel is connected from the UE-A to the MF/MRF, the call service media data of the UE-A is transmitted to the MF/MRF, and whether rendering by the MF/MRF is required is determined based on rendering indication information in each RTP packet or other data packets. If rendering is required, the data is rendered by the MF/MRF and then sent by the MF/MRF to UE-B (or the network element of the IMS network to which the UE-B belongs). If rendering is not required, the data may be directly sent by the MF/MRF to the UE-B or sent together with the call service media data to be rendered to the UE-B (or the network element of the IMS network to which UE-B belongs).

The media data transmission channel established between the UE-B and the MF/MRF is typically the RTP channel.

Method 3: at least two media data transmission channels are established between the UE-A and the MF/MRF, which are the RTP channel and the application data channel respectively, or both are the RTP channels, where the RTP channel may transmit only the call service media data that needs to be rendered, or any call service media data; and the application data channel transmits call service media data that needs to be rendered or configured for rendering.

At least one media data transmission channel is established between the MF/MRF and the UE-B, and call service media data rendered and unrendered by the MF/MRF is transmitted.

When the media data transmission channel is established, the media data transmission channel needs to be instructed to transmit the call service media data that needs to be rendered.

The present application provides a method for a 5G AR call service. According to a media processing capability of a communication terminal and the media processing capability of the IMS network, the terminal side or the network side may initiate negotiation of the rendering resources to provide rendering for an AR communication service. Meanwhile, through information indication in media data or control signaling, the terminal and the network provide flexible rendering processing, and adaptively and reasonably use the rendering resources based on current resource changes. Through the present application, the resource capability can be efficiently used, and an optimal AR call experience can be provided.

The application is applicable to real-time transmission service scenarios based on AVS3 video coding code streams, such as a video conference, a video call, an interactive live broadcast, and remote monitoring.

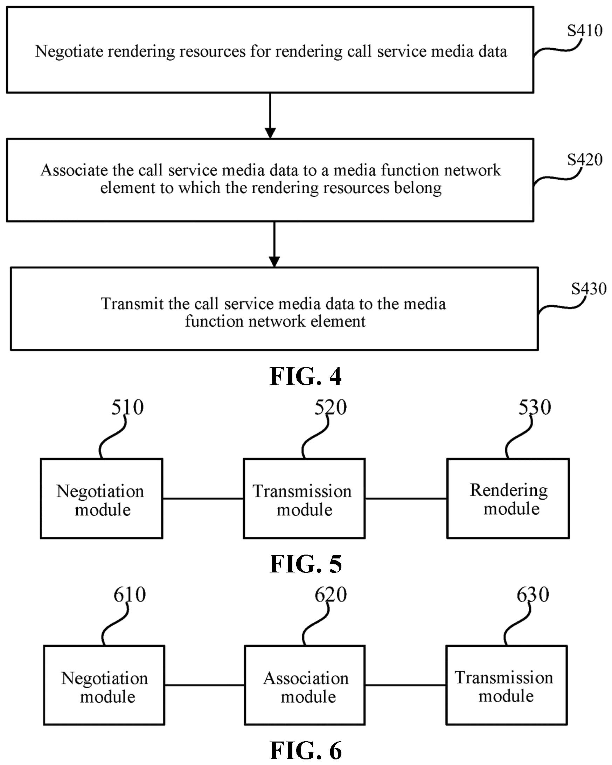

In an exemplary implementation, the present application further provides a rendering method. FIG. 4 is a schematic flowchart of another rendering method according to an embodiment of the present application, and the method may be applicable to a case of rendering call service media data. The method may be performed by a rendering apparatus, and the apparatus may be implemented by software and/or hardware and integrated on a communication node. The communication node may be a node having a communication function, such as a terminal device. For content not detailed in this embodiment, reference may be made to the above-mentioned embodiments, and no further elaboration is provided herein.

As shown in FIG. 4, the rendering method according to this embodiment of the present application includes the following.

S410, negotiating rendering resources for rendering call service media data.

The communication node may negotiate with the Internet protocol multimedia subsystem to determine the rendering resources for rendering the call service media data.

In this embodiment, the negotiation may be triggered by either the communication node or the Internet protocol multimedia subsystem.

S420, associating the call service media data to a media function network element to which the rendering resources belong.

In this embodiment, the call service media data is associated with the media function network element, achieving anchoring of the call service media data to the media function network element.

S430, transmitting the call service media data to the media function network element.

In this embodiment, the call service media data is transmitted to the media function network element, implementing the rendering of the call service media data by the media function network element of the Internet protocol multimedia subsystem.

The present application provides the rendering method. The communication node performs negotiation about the rendering resources, thereby implementing the determination of the rendering resources for the call service media data of the communication node. After determining the rendering resources , the rendering resources in the Internet protocol multimedia subsystem may be used to render the call service media data of the communication node. The negotiation of the rendering resources and the configuration of the rendering resources on the network side are achieved. The separated rendering of the call service media data improves the rendering efficiency of the call service media data.

Based on the above-mentioned embodiment, a variant embodiment of the above-mentioned embodiment is proposed. It should be noted that, for brevity of description, only differences from the above-mentioned embodiment are described in the variant embodiment.

In an embodiment, the negotiating the rendering resources for rendering call service media data includes: obtaining configuration information for the rendering resources.

The configuration information may be transmitted by the Internet protocol multimedia subsystem. After obtaining the configuration information, the communication node may determine whether to use the configured rendering resources to render the call service media data.

In an embodiment, the negotiating the rendering resources for rendering call service media data includes: transmitting a second rendering negotiation request.

In this embodiment, the second rendering negotiation request may be transmitted to the Internet protocol multimedia subsystem.

In an embodiment, the rendering method further includes: transmitting, through a real-time transport protocol channel and/or an application data channel with the Internet protocol multimedia subsystem, media data and/or first indication information, where the first indication information indicating a rendering condition of the media data, and the media data including the rendered data and/or unrendered data.

In an embodiment, the rendering method further includes: re-negotiating the rendering resources.

The re-negotiation of the rendering resources may be initiated by either the communication node or the Internet protocol multimedia subsystem.

In an embodiment, the re-negotiating the rendering resources includes: transmitting a first re-negotiation request for the rendering resources; and obtaining a resource allocation result for the first re-negotiation request.

In this embodiment, the communication node initiates the first re-negotiation request to obtain the resource allocation result for the Internet protocol multimedia subsystem.

In an embodiment, the re-negotiating the rendering resources includes: obtaining a second re-negotiation request for the rendering resources.

The second re-negotiation request includes a resource allocation result.

In this embodiment, the Internet protocol multimedia subsystem initiates the second re-negotiation request. Whether to use the allocated rendering resources is determined based on the resource allocation result.

In an exemplary implementation, the present application provides a rendering apparatus that may be integrated in the Internet protocol multimedia subsystem. FIG. 5 is a schematic structural diagram of a rendering apparatus according to an embodiment of the present application. As shown in FIG. 5, the rendering apparatus according to this embodiment of the present application includes: a negotiation module 510, configured to negotiate rendering resources for rendering call service media data; a transmission module 520, configured to transmit the call service media data to a media function network element to which the rendering resources belong; and a rendering module 530, configured to render the call service media data based on the rendering resources.

The rendering apparatus provided in this embodiment is for implementing the rendering method in the embodiment shown in FIG. 1. An implementation principle and technical effects of the rendering apparatus provided in this embodiment are similar to those of the rendering method in the embodiment in FIG. 1, which are not detailed herein.

Based on the above-mentioned embodiment, a variant embodiment of the above-mentioned embodiment is proposed. It should be noted that, for brevity of description, only differences from the above-mentioned embodiment are described in the variant embodiment.

In an embodiment, the negotiation module includes: an initiation unit, configured to initiate a first rendering negotiation request; a configuration unit, configured to configure rendering resources; and a transmission unit, configured to transmit configuration information for the rendering resources.

In an embodiment, for example, the initiation unit is configured to: initiate the first rendering negotiation request through an application service network element in the Internet protocol multimedia subsystem; or transmit the first rendering negotiation request to a communication node to which the call service media data belongs.

In an embodiment, for example, the configuration unit is configured to: configure the rendering resources through the media function network element in the Internet protocol multimedia subsystem.

In an embodiment, the negotiation module includes: an obtaining unit, configured to obtain a second rendering negotiation request; a determination unit, configured to determine the rendering resources for the call service media data based on the second rendering negotiation request; and a transmission unit, configured to transmit configuration information for the rendering resources.

In an embodiment, for example, the obtaining unit is configured to: obtain the second rendering negotiation request through the application service network element.

In an embodiment, for example, the determination unit is configured to: forward the second rendering negotiation request to the media function network element through the application service network element; and determine the rendering resources for the call service media data through the media function network element.

In an embodiment, for example, the transmission module is configured to: transmit an association request for the call service media data, the association request indicating associating the call service media data with the media function network element in the Internet protocol multimedia subsystem.

In an embodiment, for example, the transmission module is configured to: transmit the association request for the call service media data to the media function network element through the application service network element.

In an embodiment, the rendering apparatus further includes: a data transmission module, configured to: transmit, through a real-time transport protocol channel and/or an application data channel, the call service media data and/or first indication information, where the first indication information indicating a rendering condition of the call service media data, and the call service media data including the rendered data and/or unrendered data.

In an embodiment, the rendering apparatus further includes: a re-negotiation module, configured to: re-negotiate the rendering resources.

In an embodiment, for example, the re-negotiation module is configured to: obtain a first re-negotiation request for the rendering resources; and transmit a resource allocation result corresponding to the first re-negotiation request.

In an embodiment, for example, the re-negotiation module is configured to: initiate a second re-negotiation request for the rendering resources through the media function network element or the application service network element in the Internet protocol multimedia subsystem, where the second re-negotiation request includes a resource allocation result.

In an embodiment, the media function network element in the Internet protocol multimedia subsystem allocates resources based on the first re-negotiation request or the second re-negotiation request.

In an embodiment, for example, the rendering module is configured to: transmit the call service media data to the rendering resources allocated by the media function network element in the Internet protocol multimedia subsystem through the real-time transport protocol channel and/or the application data channel; and render the call service media data through the rendering resources allocated by the media function network element.

In an embodiment, the call service media data includes at least one of the following in an augmented reality call scenario: two-dimensional audio and video data, three-dimensional audio and video data, a three-dimensional model, a scenario description, or augmented reality metadata.

In an exemplary implementation, an embodiment of the present application further provides a rendering apparatus. The rendering apparatus may be integrated in a communication node. FIG. 6 is a schematic structural diagram of a rendering apparatus according to an embodiment of the present application. The rendering apparatus includes: a negotiation module 610, configured to negotiate rendering resources for rendering call service media data; an association module 620, configured to associate the call service media data to a media function network element to which the rendering resources belong; and a transmission module 630, configured to transmit the call service media data to the media function network element.

The rendering apparatus provided in this embodiment is for implementing the rendering method in the embodiment shown in FIG. 4. An implementation principle and technical effects of the rendering apparatus provided in this embodiment are similar to those of the rendering method in the embodiment in FIG. 4, which are not detailed herein.

Based on the above-mentioned embodiment, a variant embodiment of the above-mentioned embodiment is proposed. It should be noted that, for brevity of description, only differences from the above-mentioned embodiment are described in the variant embodiment.

In an embodiment, for example, the negotiation module is configured to: obtain configuration information for the rendering resources.

In an embodiment, for example, the negotiation module is configured to: transmit a second rendering negotiation request.

In an embodiment, the rendering apparatus further includes: a data transmission module, configured to: transmit, through a real-time transport protocol channel and/or an application data channel with the Internet protocol multimedia subsystem, media data and/or first indication information, where the first indication information indicating a rendering condition of the media data, and the media data including the rendered data and/or unrendered data.

In an embodiment, the rendering apparatus further includes: a re-negotiation module, configured to: re-negotiate the rendering resources.

In an embodiment, for example, the re-negotiation module is configured to: transmit a first re-negotiation request for the rendering resources; and obtain a resource allocation result for the first re-negotiation request.

In an embodiment, for example, the re-negotiation module is configured to: obtain a second re-negotiation request for the rendering resources, where the second re-negotiation request includes a resource allocation result.

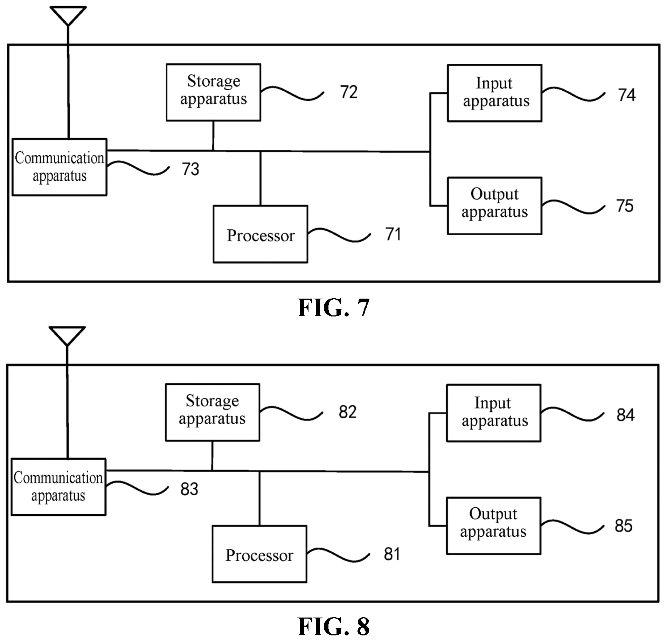

In an exemplary implementation, an embodiment of the present application further provides an Internet protocol multimedia subsystem. FIG. 7 is a schematic structural diagram of an Internet protocol multimedia subsystem according to an embodiment of the present application. As shown in the figure, the Internet protocol multimedia subsystem provided in the present application includes: one or more processors 71 and a storage apparatus 72. One or more processors 71 may exist in the Internet protocol multimedia subsystem. In FIG. 7, one processor 71 is taken as an example. The storage apparatus 72 is used for storing one or more programs. The one or more programs are executed by the one or more processors 71, so as to cause the one or more processors 71 to implement the rendering method as described in the embodiments of the present application. The processor 71 may be a network element in the Internet protocol multimedia subsystem that performs the corresponding method or a processor within a network element, which is not specifically limited herein.

The Internet protocol multimedia subsystem further includes: a communication apparatus 73, an input apparatus 74, and an output apparatus 75.

The processor 71, the storage apparatus 72, the communication apparatus 73, the input apparatus 74, and the output apparatus 75 in the Internet protocol multimedia subsystem may be connected through a bus or other methods, and bus connection is taken as an example in FIG. 7.

The input apparatus 74 may be configured to receive inputted number or character information so as to generate key signal inputs relevant to user settings and function control of the Internet protocol multimedia subsystem. The output apparatus 75 may include display devices such as a display screen.

The communication apparatus 73 may include a receiver and a transmitter. The communication apparatus 73 is configured to perform information receiving and sending communication according to control of the processor 71.

The storage apparatus 72, as a computer-readable storage medium, may be configured to store a software program, a computer-executable program, and a module, such as program instructions/modules corresponding to the rendering method described in the embodiments of the present application (e.g., the negotiation module 510, the transmission module 520, and the rendering module 530 in the rendering apparatus).The storage apparatus 72 may include a program storage area and a data storage area, where the program storage area may store an operating system and an application program needed by at least one function; and the data storage area may store data, and the like created according to the usage of the Internet protocol multimedia subsystem. In addition, the storage apparatus 72 may include a high-speed random access memory and may further include a non-volatile memory, such as at least one disk memory device, a flash memory, or other non-volatile solid state memory devices. In some examples, the storage apparatus 72 may further include memories which are remotely disposed relative to the processor 71, and these remote memories may be connected to the Internet protocol multimedia subsystem through a network. The examples of the above-mentioned network include, but are not limited to, an Internet, an intranet, a local area network, a mobile communication network, and a combination thereof.

In an exemplary implementation, an embodiment of the present application further provides a communication node. FIG. 8 is a schematic structural diagram of a communication node according to an embodiment of the present application. As shown in the figure, the communication node includes one or more processors 81 and a storage apparatus 82. One or more processors 81 may exist in the communication node. In FIG. 8, one processor 81 is taken as an example. The storage apparatus 82 is used for storing one or more programs. The one or more programs are executed by the one or more processors 81, so as to cause the one or more processors 81 to implement the rendering method as described in the embodiments of the present application.

The communication node further includes: a communication apparatus 83, an input apparatus 84, and output apparatus 85.

The processor 81, the storage apparatus 82, the communication apparatus 83, the input apparatus 84, and the output apparatus 85 in the communication node may be connected through a bus or other methods, and bus connection is taken as an example in FIG. 8.

The input apparatus 84 may be configured to receive inputted number or character information so as to generate key signal inputs relevant to user settings and function control of the communication node. The output apparatus 85 may include display devices such as a display screen.

The communication apparatus 83 may include a receiver and a transmitter. The communication apparatus 83 is configured to perform information receiving and sending communication according to control of the processor 81.

The storage apparatus 82, as a computer-readable storage medium, may be configured to store a software program, a computer-executable program, and a module, such as program instructions/modules corresponding to the rendering method described in the embodiments of the application (e.g., the negotiation module 610, the association module 620, and the transmission module 630 in the rendering apparatus).The storage apparatus 82 may include a program storage area and a data storage area, where the program storage area may store an operating system and an application program needed by at least one function; and the data storage area may store data, and the like created according to the usage of the communication node. In addition, the storage apparatus 82 may include a high-speed random access memory and may further include a non-volatile memory, such as at least one disk memory device, a flash memory, or other non-volatile solid state memory devices. In some examples, the storage apparatus 82 may further include memories remotely disposed relative to the processor 81, and these remote memories may be connected to the communication node through a network. The examples of the above-mentioned network include, but are not limited to, an Internet, an intranet, a local area network, a mobile communication network, and a combination thereof.

In an exemplary implementation, an embodiment of the present application further provides a storage medium having computer programs stored thereon. The computer programs, when executed by a processor, implement any one of the rendering methods in the present application. The storage medium has computer programs stored thereon. The computer programs, when executed by a processor, implement the rendering method in any one of the embodiments of the present application, such as the rendering method applied to the Internet protocol multimedia subsystem and the rendering method applied to the communication node, where the rendering method applied to the Internet protocol multimedia subsystem includes: negotiating rendering resources for rendering call service media data; transmitting the call service media data to a media function network element to which the rendering resources belong; and rendering the call service media data based on the rendering resources.

The rendering method applied to the communication node includes: negotiating rendering resources for rendering call service media data; associating the call service media data to a media function network element to which the rendering resources belong; and transmitting the call service media data to the media function network element.

The computer storage medium according to this embodiment of the present application may adopt any combination of one or more computer-readable media. The computer-readable medium may be a computer-readable signal medium or a computer-readable storage medium. The computer-readable storage medium may be, for example, but is not limited to, electric, magnetic, optical, electromagnetic, infrared, or semiconductor systems, apparatuses, or devices, or any combination of the above. More specific examples (non-exhaustive list) of the computer-readable storage medium include: an electrical connection with one or more wires, a portable computer disk, a hard drive, a random access memory (RAM), a read only memory (ROM), an erasable programmable read only memory (EPROM), a flash, fiber optics, a portable CD-ROM, an optical storage device, a magnetic storage device, or any proper combination of the above. The computer-readable storage medium may be any tangible medium including or storing a program, and the program may be for use by or for use in conjunction with an instruction execution system, apparatus, or device.

The computer-readable signal medium may include data signals propagated in a base band or propagated as a part of a carrier wave, carrying computer-readable program code. The propagated data signals may have a plurality of forms, including but not limited to electromagnetic signals, optical signals, or any proper combination of the above. The computer-readable signal medium may also be any computer-readable medium except the computer-readable storage medium. The computer-readable medium may send, propagate, or transmit programs for use by or for use in conjunction with the instruction execution system, apparatus, or device.

The program code included in the computer-readable medium may be transmitted by any proper medium, including but not limited to wireless, a wire, an optical cable, radio frequency (RF), etc., or any proper combination of the above.

The computer program code for executing the operations of the present application may be written in one or more programming languages or a combination thereof. The programming languages include object-oriented programming languages such as Java, Smalltalk, C++, as well as conventional procedural programming languages, such as "C" language or similar programming languages. The program code may be completely executed on a computer of a user, partially executed on a computer of a user, executed as a standalone software package, partially executed on a computer of a user and partially executed on a remote computer, or completely executed on a remote computer or server. In a case of the remote computer, the remote computer may be connected to the computer of the user through any kind of network, including a local area network (LAN) or a wide area network (WAN), or may be connected to an external computer (e.g., connected through the Internet with an Internet service provider).

The foregoing descriptions are merely exemplary embodiments of the present application and are not intended to limit the scope of protection of the present application.

Those skilled in the art should understand that the term "terminal device" covers any suitable type of wireless user device, such as mobile phones, portable data processing apparatuses, portable web browsers, or in-vehicle mobile stations.

Typically, various embodiments of the present application may be implemented in hardware or dedicated circuits, software, logic, or any combination thereof. For example, some aspects may be implemented in hardware, while other aspects may be implemented in firmware or software executable by a controller, a microprocessor, or another computing apparatus, although the present application is not limited to this.

This embodiment of the present application may be implemented by executing computer program instructions through a data processor of a mobile apparatus, such as in a processor entity, or by hardware, or by a combination of software and hardware. The computer program instructions may be assembly instructions, instruction set architecture (ISA) instructions, machine instructions, machine-dependent instructions, microcode, firmware instructions, state setting data, or source code or object code written in any combination of one or more programming languages.

A block diagram of any logical flow in the accompanying drawings of the present application may represent program steps, or may represent interconnected logical circuits, modules, and functions, or may represent a combination of the program steps, the logical circuits, the modules, and the functions. The computer program may be stored in the memory. The memory may be of any type suitable for a local technical environment and may be implemented using any suitable data storage technology, for example, including but not limited to, a read-only memory (ROM), a random access memory (RAM), an optical memory apparatus and system (a digital video disc (DVD), or a compact disk (CD)), etc. The computer-readable medium may include a non-transitory storage medium. The data processor may be of any type suitable for the local technical environment, for example, including but not limited to, a general-purpose computer, a special-purpose computer, a microprocessor, digital signal processing (DSP), an application specific integrated circuit (ASIC), a field-programmable gate array (FPGA), and a processor based on a multi-core processor architecture.

## Claims

1. A rendering method comprising:
negotiating rendering resources for rendering call service media data;
transmitting the call service media data to a media function network element to which the rendering resources belong; and
rendering the call service media data based on the rendering resources.

2. The method according to claim 1, wherein the negotiating the rendering resources for rendering call service media data comprises:
initiating a first rendering negotiation request;
configuring the rendering resources; and
transmitting configuration information for the rendering resources.

3. The method according to claim 2, wherein the initiating the first rendering negotiation request comprises:
initiating the first rendering negotiation request through an application service network element in an Internet protocol multimedia subsystem; or
transmitting the first rendering negotiation request to a communication node to which the call service media data belongs.

4. The method according to claim 2, wherein the configuring the rendering resources comprises:
configuring the rendering resources through a media function network element in an Internet protocol multimedia subsystem.

5. The method according to claim 1, wherein the negotiating the rendering resources for rendering call service media data comprises:
obtaining a second rendering negotiation request;
determining the rendering resources for the call service media data based on the second rendering negotiation request; and
transmitting configuration information for the rendering resources.

6. The method according to claim 5, wherein the obtaining the second rendering negotiation request comprises:
obtaining the second rendering negotiation request through an application service network element.

7. The method according to claim 5, wherein the determining the rendering resources for the call service media data based on the second rendering negotiation request comprises:
forwarding the second rendering negotiation request to a media function network element through an application service network element; and
determining the rendering resources for the call service media data through the media function network element.

8. The method according to claim 1, wherein the transmitting the call service media data to a media function network element to which the rendering resources belong comprises:
transmitting an association request for the call service media data, the association request indicating associating the call service media data with the media function network element in the Internet protocol multimedia subsystem.

9. The method according to claim 8, wherein the transmitting the association request for the call service media data comprises:
transmitting the association request for the call service media data to the media function network element through an application service network element.

10. The method according to claim 1, further comprising:
transmitting, through a real-time transport protocol channel and/or an application data channel, at least one of the call service media data or first indication information, wherein the first indication information indicating a rendering condition of the call service media data, and the call service media data comprising rendered data and/or unrendered data.

11. The method according to claim 1, further comprising:
re-negotiating the rendering resources.

12. The method according to claim 11, wherein the re-negotiating the rendering resources comprises:
obtaining a first re-negotiation request for the rendering resources; and
transmitting a resource allocation result corresponding to the first re-negotiation request.

13. The method according to claim 11, wherein the re-negotiating the rendering resources comprises:
initiating a second re-negotiation request for the rendering resources through a media function network element or an application service network element in an Internet protocol multimedia subsystem,
the second re-negotiation request comprises a resource allocation result.

14. The method according to claim 12 or 13, wherein the media function network element in the Internet protocol multimedia subsystem allocates resources based on the first re-negotiation request or the second re-negotiation request.

15. The method according to claim 1, wherein the rendering the call service media data based on the rendering resources comprises:
transmitting the call service media data to rendering resources allocated by a media function network element in an Internet protocol multimedia subsystem through a real-time transport protocol channel and/or an application data channel; and
rendering the call service media data through the rendering resources allocated by the media function network element.

16. The method according to any one of claims 1 to 15, wherein the call service media data comprises at least one of the following in an augmented reality call scenario: two-dimensional audio and video data, three-dimensional audio and video data, a three-dimensional model, a scenario description, or augmented reality metadata.

17. A rendering method comprising:
negotiating rendering resources for rendering call service media data;
associating the call service media data to a media function network element to which the rendering resources belong; and
transmitting the call service media data to the media function network element.

18. The method according to claim 17, wherein the negotiating the rendering resources for rendering call service media data comprises:
obtaining configuration information for the rendering resources.

19. The method according to claim 17, wherein the negotiating the rendering resources for rendering call service media data comprises:
transmitting a second rendering negotiation request.

20. The method according to claim 17, further comprising:
transmitting, through a real-time transport protocol channel and/or an application data channel with an Internet protocol multimedia subsystem, at least one of media data or first indication information, wherein the first indication information indicating a rendering condition of the media data, and the media data comprising rendered data and/or unrendered data.

21. The method according to claim 17, further comprising:
re-negotiating the rendering resources.

22. The method according to claim 21, wherein the re-negotiating the rendering resources comprises:
transmitting a first re-negotiation request for the rendering resources; and
obtaining a resource allocation result for the first re-negotiation request.

23. The method according to claim 21, wherein the re-negotiating the rendering resources comprises:
obtaining a second re-negotiation request for the rendering resources,
the second re-negotiation request comprises a resource allocation result.

24. An Internet protocol multimedia subsystem comprising:
one or more processors; and
a storage apparatus storing one or more programs that, when executed by the one or more processors, cause the one or more processors to implement the method of any one of claims 1 to 16.

25. A communication node comprising:
one or more processors; and
a storage apparatus storing one or more programs that, when executed by the one or more processors, cause the one or more processors to implement the method of any one of claims 17 to 23.

26. A storage medium having computer programs stored thereon, the computer programs, when executed by a processor, implement the method of any one of claims 1 to 23.
